# EUROPEAN PATENT SPECIFICATION

(11) **EP 2 421 922 B1**
(45) Date of publication and mention of the grant of the patent: **21.08.2013**
(21) Application number: 10723327.2
(22) Date of filing: 22.04.2010
(51) Int. Cl.: C09D 9/00

(54) **PAINT STRIPPING COMPOSITION AND DEVICE FOR APPLICATION THEREOF FOR PAINT STRIPPING BY PEEL-OFF**
FARBABBEIZZUSAMMENSETZUNG UND VORRICHTUNG FÜR DEREN VERWENDUNG ZUM ABSCHÄLEN
COMPOSITION DE DÉCAPAGE DE PEINTURE ET SON DISPOSITIF D'APPLICATION PERMETTANT D'EFFECTUER LE DÉCAPAGE PAR PELAGE

(30) Priority: 23.04.2009 IT PD20090104
(43) Date of publication of application: 29.02.2012
(73) Proprietor: Universita' Degli Studi Di Trieste, 34127 Trieste (IT)
(72) Inventor: ADAMI, Gianpiero, 34127 Trieste (IT)
(74) Representative: Gervasi, Gemma
(86) International application number: PCT/IB2010/051772
(87) International publication number: WO 2010/122515

(56) References cited:
- EP-A1- 1 038 928
- EP-A1- 1 160 297
- WO-A2-02/057375
- US-A- 5 478 491
- US-B1- 6 673 157

## Description

### Field of the invention

The present invention relates to paint stripping compositions usable for removing paints by peel-off from surfaces of materials of various types, based on non-chlorinated eco-compatible solvents, to a device for their application, and to a method for removing said paints by said device in which said compositions are included.

### State of the art

The commonly used and effective paint stripping method is that foreseeing the use of a chemical paint stripper to be distributed on the surface of a manufactured article such as to cause the paint to separate and enable it to be removed without harming the support, by using steel or wooden scrapers or other tools. An example of chemical paint stripping is the paint stripping method, much used in the past, based on the use of caustic soda. This is an inadvisable method usable only on low value articles as it can seriously damage the article subjected to paint stripping. Moreover, alkali based paint stripping products must be used with suitable caution as alkalis are known to be toxic and can severely burn the skin and eyes, even on short contact.

To overcome these problems the most recent paint stripping methods use products based on organic compositions having solvent properties for the film generated by the paints.

Dichloromethane or methylene chloride (DCM) is the most common organic compound used for this purpose in paint strippers. DCM based commercial products are of two types: non-flammable products and flammable products. These latter contain less DCM but have other more flammable co-solvents such as: acetone, toluene and methanol. DCM evaporates quickly and can be easily inhaled, in addition to being absorbed through the skin. Short term exposures can cause irritation problems for the eyes, the skin, the nose and the lungs. As DCM is transformed in vivo into carbon monoxide and hence lowers the oxygen transporting capacity of blood, in individuals who use DCM-based paint strippers in non-ventilated environments, prolonged exposure can also cause vertigos, headache, loss of coordination, and even problems for the heart, lungs or blood diseases, plus damage to the liver and kidneys. In terms of effects on man, the greatest risks are the narcotic effects and the subsequent depression of the central nervous system, particularly at high concentrations. In addition to all this, DCM is classified as a potential carcinogen by the EPA (Environmental Protection Agency) both of the United States and of the European Union. The use of DCM based paint strippers therefore requires great care, knowledge of the risks involved and professionally skilled personnel.

Other organic solvents present in commercial products are acetone, toluene and methanol, often present in mixture with each other. These solvents evaporate rapidly and are very flammable. Inhaling these substances causes various effects, including dizziness, asphyxia and headache. Inhaling high levels of toluene can cause problems to unborn children. Moreover, if inhaled for lengthy periods at high levels, they can cause brain damage. Toluene and methanol are potent poisons if ingested. To prevent health and fire risks these solvents must be used only in completely ventilated environments.

Paint stripping products based on N-methyl-2-pyrrolidone (NMP) are also known. This is a potent solvent which on contact can cause skin problems (irritation, soreness and blisters). These effects may only appear if remaining exposed for a certain time period. NMP can also be absorbed through the skin and hence can quickly enter the human body through the skin to cause problems to various organs, and in particular can give rise to reproductive problems, and induce problems in unborn children. It is hence very important to wear gloves which resist the solvent and prevent skin contact; the hands must always be washed after use, even if gloves are used. Common kitchen gloves (rubber or latex) are not suitable; chemically resistant gloves must be used (e.g. of nitrile). Lengthy use of these products in non-ventilated areas must be avoided.

Other organic compounds used in paint stripping products are dibasic esters (DBE), of which the possible human effects are hardly known. Some users have noted a slight eyesight loss after their use in non-ventilated environments. Repeated inhalation by laboratory animals has shown damage to the nasal cells. It is therefore advisable to avoid using this product for lengthy periods without ventilation and to be adequately protected by gloves, overalls and goggles. The work area must always be subjected to air changes.

Dimethylsulphoxide (DMSO) is also much used in paint stripping products. This is an aprotic polar solvent, similar to NMP, which can easily penetrate into the skin. Compared with the previously noted solvents, however, DMSO is devoid of macroscopic toxicity, even though it can be mildly irritating to the skin. In any event, it is much used for its property as a solvent of very water- or oil-insoluble compounds and for its property as a skin penetration enhancer of other compounds.

Also known are so-called green or environmentally friendly paint strippers based on lemon extracts (limonene or other terpenes) which, although devoid of macroscopic toxicity as DMSO, must be used with suitable personal protective equipment in ventilated environments or with good air change, as they are irritants and induce sensitization by contact.

In consideration of their relatively low toxicity, DMSO and terpenes, in particular limonene, have become the organic compounds of choice in conceiving paint stripping products.

US 5,468,415 describes a NMP and limonene paint stripping composition for brush application in which the NMP is in a concentration between 45-90%, the limonene between 10-55%, optionally associated with a thickener, In particular methylcellulose, up to 10%.

To overcome the NMP and limonene solvent evaporation problems, US 5,478,491 discloses the same paint stripping composition, to which solvent evaporation inhibition agents, such as waxes and paraffin, are added in a concentration between 0.1-10%.

Other examples of paint stripping compositions in which DMSO and/or other solvents can be used together with limonene are described for example in US 6,534,461, US 6,873,157 and US 6,923,873.

US 6,534,461 discloses a paint stripping composition in which DMSO or NMP in concentrations between 10-30% are associated with dibasic acid esters in concentrations between 10-50% and limonene in concentrations between 10-25%. Many other components are also foreseen, including a thickener, such as cellulose, at 0.2-1%. The paint stripping composition is applied to the surface to be treated by deposition.

In US 6,673,157, DMSO, in maximum concentrations of 70% and preferably between 1-50%, is associated with esters of organic acids, such as acetic, lactic, oxalic, tartaric and citric acid, up to 60% and preferably between 60% and 99%.

In US 6,923,873, the paint stripping composition comprises, together with many other components, DMSO in concentrations between 1% and 5%, NMP between 15-25%, limonene between 1 and 20% and a thickener between 0.5% and 5%. The paint stripping composition is applied to the surface to be treated by deposition.

None of these applications solves the problem of using solvents with a medium/high toxicity profile, neither does the type of application solve the problem of solvent evaporation with the aforesaid inevitable risks and the obligation to use personal protection and safety devices (suitable gloves, adequate clothes. breathing apparatus, anti-gas masks, exhaust fans, ventilation systems, etc.) which increase difficulty for the operator.

There is hence still a requirement by operators of the art to have available a good paint stripping product which is highly effective, easy to use, of low toxicity for the operator and environment and reduced production costs.

A purpose of the present invention is therefore to provide an innovative paint stripping system for the various paint types which is of little danger to man and the environment, is easily applied and is effective.

Another purpose of the present invention is to provide a system for applying this paint stripping system able to prevent solvent evaporation, such as both to enhance the paint stripping effect of the composition and to protect operators.

### Summary

The aforesaid purposes are attained by a paint stripping composition consisting of compounds with solvent properties and with low impact to both operator health and the environment. This composition has also proved effective when used for paint stripping by peel-off. In this respect, paint stripping by peel-off has proved to be the most suitable method for the aforesaid purposes.

Consequently, the invention relates to a paint stripping composition based on low toxicity products with solvent properties and to a paint stripping method by peel-off.

A first aspect of the invention is therefore a paint stripping composition comprising at least two components with solvent properties, wherein the first component is dimethylsulphoxide in a concentration range of between 85 and 90% w/w and the second component is limonene in a concentration range of between 5 and 10% w/w. Preferably a component with thickening properties is also added in a concentration range of between 2 and 3% w/w to the combination of the two solvent components.

To further limit the potential undesired effects of the solvents on the operator and on the environment, the paint stripping composition of the invention is applicable to the surface to be paint-stripped by a device formed from an absorbent layer, in which the paint stripping composition is included and from which it is released in a gradual controlled manner, and from a protective support enabling easy removal of this layer and a reduction in the evaporation of the components with paint stripping properties from the composition itself.

The paint stripping composition and said device can be combined into a kit usable for paint stripping, preferably by peel-off, from articles of various types.

According to another aspect, the invention therefore provides a paint stripping kit comprising:
- at least one container with the paint stripping composition comprising at least dimethylsulphoxide in a concentration of between 85 and 90% w/w and limonene in a concentration of between 5 and 10% w/w;
- at least one paint stripping device comprising;
   - at least one absorbent layer of polymeric type having a thickness of at least 0.40 mm and a grammage of at least 0.004 g/cm², and an absorption capacity for water and/or the paint stripping composition of between 0.05 and 0.30 g/cm²; and
   - at least one protective support to which said absorbent layer is combined by a further layer of adhesive material interposed between the two said layers.

The kit for paint stripping by peeling of the invention can further comprise an instruction leaflet for using the composition and device.

In a further aspect the invention provides a paint stripping method comprising at least the steps of:
- incorporating a paint stripping composition comprising at least dimethylsulphoxide in a concentration of between 85 and 90% w/w and limonene in a concentration of between 5 and 10% w/w into the absorbent layer of a device in which said absorbent layer is of polymeric type and has a thickness of at least 0.40 mm and a grammage of at least 0.004 g/cm², and an absorption capacity for water of between 0.05 and 0.15 g/cm², and is combined to a protective support by a further layer of adhesive material interposed between the two said layers;
- applying the device to a surface to be paint-stripped by bringing the absorbent layer incorporating the paint stripping composition into contact with the paint layer to be removed;
- pulling off the device together with one or more paint layers;
- cleaning by light scraping and drying with absorbent paper.

The objects and advantages of the paint stripping composition and of the device for its application and peel-off removal of the paint from surfaces to be paint-stripped will be more apparent during the course of the ensuing detailed description in which examples of compositions and their paint stripping capacity when applied by said device are described by way of non-limiting example of the invention.

### Detailed description of the invention

### Definitions

Painting product: a painting product means a mixture of chemical products which when applied to a support is able to form a solid film having mechanical and chemical resistance, and characteristics, with regard to colour, appearance and feel, such as to also change the aesthetic qualities of the manufactured article. Those painting products which do not contain pigments, or contain them only in a quantity such as to only slightly modify the support colour, while allowing a certain transparency, are known as varnishes. Those painting products which contain pigments in quantities such as to completely hide the surface are known as enamels if glossy or paints if matt.

All painting products are liquid obtained by mixing several components, which can substantially be grouped into the following classes: binders, pigments, solvents/diluents and additives.

The need to adapt the characteristics of the paint film to the most varied environmental conditions, to the innumerable support forms and materials and to the various application methods has resulted in specialization and differentiation of painting products. Binders, known as polymers or resins in practice, are the film-forming agents which determine the main properties of painting products. The binders are hence the most important ingredients of a painting product and a binder often consists of a mixture of resins to obtain the best results. The essential characteristic of the binder is hence its capacity to give rise to a continuous film, i.e. its "film-forming power".

Filming can take place in two ways: i) physical filming: this happens when the painting product hardens by simple evaporation of solvents and diluents, without the binder undergoing chemical modification; hardening is reversible, in that the solvent can return the binder to solution (for example nitrocellulose paints); ii) chemical filming: this happens when the painting product hardens by a series of chemical reactions, facilitated or not facilitated by the temperature to which the binder is subjected. These reactions can be caused by the oxygen contained in the air (for example in alkyd paints), or by particular chemical compounds , (catalysts) able to react with determined functional groups present in the binder, to generate complex structures leading to a molecular weight increase of the polymer (for example polyurethane paints).

The product takes its name from the binder present in greatest quantity. Hence, alkyd resins give alkyd paints, nitrocellulose resins give nitrocellulose paints, acrylic resins give acrylic paints, etc.

Binders are normally organic and can be divided into: a) binders of natural origin, such as drying oils, and natural resins such as colophony and rubbers; b) binders of synthetic origin, such as most of the currently used resins.

For the purposes of this description, any painting product will be identified generically as "paint".

*Paint stripping:* this is the process of removing one or more paint layers from surfaces of materials of various types, such as wood, plastics and metals, to return the material to its bare state (for example wood graining), to remove flakes of old paint before newly painting, to change colour without traces of the old colour, or for defective pieces.

*Paint stripping products:* "paint stripper" or "paint remover" is the term generically used to indicate solvent mixtures intended to remove paint, and hence clean the underlying surface. The main ingredient is usually dichloromethane (DCM): in fact, more than 90% of the products currently sold in Italy are DCM based. Also used are formulations based on N-methyl-2-pyrrolidone (NMP), esters (dibasic esters, such as dimethyl esters of short chain dicarboxylic acids, including adipic and glutamic acid, called DBE), aromatic hydrocarbons, dimethylformamide, dimethylsulphoxide, benzyl alcohol and other solvents (for example terpenes). These formulations change depending on the type of paint to be treated and the surface on which it is applied.

Paint strippers are sold commercially in two forms: as liquids and as gels or semi-paste products (with thixotropic characteristics) which can, hence, also be used on vertical surfaces. The principle, on which they are based, is the penetration into the paint film by the active ingredient which causes it to swell. The volume increase causes an internal tension which, together with the weakening of the layer adhering to the underlying surface, enables the paint to be separated from the substrate. In this respect, all formulations include the presence of solvents which weaken the bonds between the paint and substrate, and this weakening can occur according to various mechanisms. i) dissolution of the paint to form a solution with the solvent ii) disintegration of the paint film by chemical reactions with the solvent; iii) penetration into the paint film and detachment of the paint from the support

In addition to the main ingredient, various co-solvents can be added. These improve the solvent capacity of the main ingredient, aiding its penetration into the paint and its removal, these differing according to the objective to be achieved (for example: ethanol, methylethylketone, benzyl alcohol, etc.).

Activators are added to increase penetration rate, serving to break the molecular and intermolecular bonds of the paint film.

Surfactants help to maintain the surface moist by increasing the area within which the solvent is able to penetrate into the paint, and can be anionic or cationic (for example dodecylbenzene sulphonate).

Thickeners are used in thixotropic compositions, serving to form a gel which can adhere to vertical surfaces and reduce solvent evaporation rate prolonging the solvent-paint contact time. They are substances based on cellulose ethers, polyacrylate gels or paraffin wax.

Corrosion inhibitors and sequestering or chelating agents can be added to protect surfaces and block any chemical reactions of the product.

Dyes are added to characterise a product from competitor products or to render it visible after application.

Paint strippers can be used on all surfaces; they are applied with a brush and must be left to act on the surface for the required time.

A spatula or a scraper then has to be used to scrape off the paint. If there are several paint layers, it may be necessary to apply the product several times. As they contain toxic substances, suitable precautions have to be taken: wearing gloves, overalls, goggles, working in ventilated environments, and not during the hottest part of the day.

### Description

The first solvent component considered for the composition of the invention is dimethylsulphoxide (herein also indicated as DMSO) (CAS No. 67-68-5). DMSO is an aprotic solvent miscible with a number of solvents, including alcohols, ethers, ketones, chlorinateds and aromatics, in addition to being miscible with water in all proportions. It has been long used in the medical field mainly as a carrier for pharmacologically active substances because of its capacity to penetrate deeply under the skin and other membranes without damaging them, to transport other molecules into the biological system. Dimethylsulphoxide is hence used for topical application of pharmaceutical products, in addition to its uses as a local analgesic, anti-inflammatory and antioxidant. Dimethylsulphoxide is however an irritant, especially in the case of ingestion or contact with eyes, skin and respiratory tract. Although some studies indicate that dimethylsulphoxide is less harmful than dimethylformamide, prolonged exposure can cause dermatitis and perhaps damage to the liver or kidneys. The most important toxicological concern is the capacity of dimethylsulphoxide to transport other substances into the tissues by contact with the skin. It is also used as a solvent for removing paints from wood and metal, it having the advantage of greater safety than other solvents.

The second co-solvent component considered for the composition of the invention is limonene, preferably in its R-(+)-limonene form (CAS No. 5989-27-5). Limonene is an alkene, pertaining to the simple terpene family, and, being a chiral molecule, it can be in the dextrorotatory and levorotatory enantiomer forms and in the raceme form known as dipentene. It is a liquid with lemon odour (S enantiomer) or orange odour (R enantiomer), very widespread in nature in many essential oils (of orange peel, fir needles, pine needles, etc.). Dipentene, contained in oil of turpentine, is synthetically prepared by isoprene polymerization and by dry distillation of India rubber. In its different forms and origins, limonene is widely used as a flavouring agent in the food and pharmaceutical industry. As dipentene, having excellent solvent properties, it is used for this purpose in the rubber and paint industry, also given its low toxicity.

Preferably a thickening compound can be added to the composition formed from the two solvent components, DMSO and limonene, to give thixotropic properties to the composition formed from the two solvent components, and in this case the thickener is preferably selected from cellulose and its ether derivatives.

The results obtained with compositions formed from different solvents and mixtures thereof, including dimethylsulphoxide, water, limonene, ethyl acetate and acetone in various proportions, both as such and gelled with thickeners, showed that an optimal paint stripping effect was achieved only with compositions in which DMSO is the solvent and limonene the co-solvent and the thickening agent is a cellulose ether.

In this respect, as will be more apparent from the experimental part, which reports in detail the tests carried out and the results obtained, a composition consisting of only DMSO as solvent and a cellulose thickener, in which the DMSO concentration is 97% w/w, and hence very high, and the thickener is 3% w/w, proved to have a less effective paint stripping effect. The addition of limonene as co-solvent agent was considered a possible solution for increasing the solvent capacity of a DMSO based composition. However, even in this case it was found that a not further specified combination of DMSO and limonene was insufficient, but that the concentration of this co-solvent is critical to obtain an optimal paint stripping effect. Therefore, in the paint stripping composition of the invention, the limonene must be in a concentration of at least 5% w/w and preferably be within the concentration range between 5 and 10%.

Consequently the paint stripping compositions of the invention comprise at least two components having solvent properties, and in particular comprise dimethylsulphoxide as primary solvent in a concentration range between 85 and 90% w/w and limonene as co-solvent in a concentration range between 5 and 10% w/w.

The further addition of thickener (or gelling agent) improves the paint stripping capacity of these compositions, as it increases the thixotropic properties of the composition and hence increases contact between the solvents included in the composition and the paint film, and prevents solvent evaporation.

It is therefore preferable to add to the combination of the two solvent components, dimethylsulphoxide and limonene, a further component with thickening properties, preferably selected from the cellulose ether group and more preferably selected from the group consisting of methylcellulose, hydroxyethyl cellulose, methylhydroxyethyl cellulose, hydroxypropyl cellulose, methylhydroxypropyl cellulose, in a concentration range comprised from 2 to 3% w/w, in this case the thickener being preferably methylhydroxyethyl cellulose (CAS No. 9032-42-2).

In a preferred embodiment, the compositions of the invention comprise 87% w/w DMSO, 10% w/w limonene and 3% w/w methylhydroxyethyl cellulose.

The two solvent components, DMSO and limonene, proved however to be only poorly miscible at room temperature. In particular, at a temperature of 20°C, the solubility of limonene in DMSO is 4% w/w and at 30°C is 8% w/w. The composition preparation method was therefore also optimized operating both under cold and under hot conditions.

Room temperature preparation can be achieved by adding the gelling agent to the mixture of the two solvents, under stirring, mixing together until a composition is achieved in which the two solvents are homogeneously dispersed.

Hot preparation comprises mixing the two solvents (limonene and DMSO) in the required proportions and heating to a temperature of 40-50°C (for example in an oven or in a hot water bath). The gelling agent is added under stirring when the mixture has reached the set temperature. At this temperature, gelling occurs quickly, the composition being very homogeneous and more fluid. Then leaving the composition at room temperature for a time depending on the quantity prepared (about 1 hour per 100 g of composition), it thickens to reach the required consistency.

Hot preparation (40-50°C) represents both a saving in composition preparation time and a better preparation homogeneity. These advantages are due substantially to the greater miscibility of the two solvents and to the greater mixture fluidity.

If preserved properly closed, the composition obtained has proved to be stable for several months, maintaining its paint stripping capacity intact.

For the purposes of the invention, the paint stripping composition is preferably applied by a device consisting of an absorbent layer and a protective support layer enabling: i) better contact between the paint layer and the paint stripping composition; ii) reduction in evaporation of composition components and greater paint stripping effectiveness; iii) reduction in solvent evaporation, hence lesser toxicity for the operator and lesser contact with the operator (e.g. hands): iv) the ability to give a predefined form to the application and to better define the intervention area; v) cleaner application and easy removal of paint residues.

The application device for the paint stripping composition of the invention found to be the most suitable for paint stripping by the "peel-off" method is composed of at least three parts:
- an absorbent layer in which the paint stripping composition is included;
- a support layer for this absorbent layer; and
- a layer consisting of an adhesive material interposed between the two said layers.

The support layer consists of a film which can be of a robust but flexible material. Suitable materials for this layer can be selected from polyvinylchloride (PVC), polyethylene, latex and aluminium. The thickness of this support can be comprised from 5 to 100 µm. In addition to giving shape and support to the device absorbent layer, the support layer also limits to the maximum extent solvent evaporation and contact between operators and the product.

Said support layer is covered on one side by a suitable adhesive material able to stably secure it to the absorbent layer. The support layer can therefore be an adhesive tape or sheet.

As support for the absorbent layer series of materials were evaluated, including: aluminium film of different thicknesses (from 10 to 50 µm), polyethylene film (20-60 µm), PVC film (30-70 µm) and latex (80-120 µm). Because of its deformability characteristics, the 10 µm aluminium film was found to be the best material for application to non-smooth or irregular surfaces, while for flat or regular surfaces aluminium and PVC supports give equivalent results.

For the device of the invention, the most preferred support is hence an aluminium tape or sheet of 10 µm thickness.

The second layer of the device consists of an absorbent layer steadily combined with the support layer by an adhesive layer interposed between the two layers. The function of this layer is to absorb the paint stripping composition: for this function, its constituent material must have good absorbent capacity and an adequate grammage and thickness.

For the purpose of including the paint stripping composition, the absorbent layer has a thickness of at least 0.40 mm and a grammage of at least 0.004 g/cm² and consists of a polymer fabric selected from polyester and viscose of at least 70% w/w or combinations thereof, preferably in the form of non-woven fabric (NWF), having fibres of average diameter comprised from 5 to 20 µm and a capacity for absorbing water and/or the composition of the invention of between 0.05 and 0.30 g/cm², porosity between 0.85 and 0.95 and density between 0.10 and 0.20 g/cm³. Preferably the material selected as absorbent layer is a non-woven fabric cloth consisting of 100% polyester with a thickness of 0.50-0.60 mm and a grammage of 0.007-0.009 g/cm² with fibres of average diameter 20 µm, porosity between 0.85 and 0.95 and density between 0.10 and 0.20 g/cm³. This material has an absorption capacity for the paint stripping composition of the invention of at least 0.10 g/cm² and preferably between 0.10 and 0.30 g/cm².

The paint stripping composition and the device for its application, according to the present invention, are usable by a peel-off paint stripping method as reported in the Summary and described in detail hereinafter.

At the moment of use, the paint stripping composition is distributed on the absorbent layer of the device. The optimal composition quantity to be spread onto the absorbent layer to obtain good paint stripping is 0.10-0.15 g of paint stripping composition per square centimetre of absorbent layer.

The paint stripping process can be carried out either hot or at room temperature.

Once the device is applied, in which the composition has been included before application to the surface of the article to be paint-stripped, hot paint stripping can be implemented in two ways: the entire manufactured article to be paint-stripped can be heated in an oven to temperatures between 40-60°C, or just the portion to be paint-stripped can be heated by radiation by means of an incandescent lamp such that the temperature on the article surface is around 40-60°C.

When sufficient time has passed to cause the paint stripping composition to act, the device is removed and the residual paint remaining on the surface to be paint-stripped is easily removed with a spatula. The paint-stripped surface is then cleaned of the traces of paint stripping composition with a sheet of absorbent paper.

Hot paint stripping is preferred because it has a higher yield in terms of process rapidity and effectiveness, passing from an application time of about 1 hour required at room temperature to 15-20 minutes when hot. With resistant paints. such as two-component epoxys, which require some hours and several applications of paint stripping composition at room temperature, the times are also considerably shortened, obtaining good results even after 30 minutes of application.

Application at room temperature, around 20-25°C, is however to be preferred for paint stripping manufactured articles particularly delicate and/or of artistic or historical merit. It is in fact a process relatively less aggressive and more controllable, but it has the disadvantage of requiring longer times and more applications in the case of particularly resistant paint layers.

In this respect, hot paint stripping requires greater attention to be given to paint stripping times and to the sensitivity of the manufactured item to temperature if only a part of the item is to be paint-stripped: too lengthy times can lead to an excessive paint stripping effect to the extent of damaging the support, especially when this is wood.

With regard to the materials treatable with the paint stripping composition of the invention, experimental tests, described in detail hereinafter as non-limiting illustration of the invention, were carried out mainly on wooden supports painted with water paints, alkyl paints, acrylic paints, polyurethane paints, epoxy and two-component epoxy paints, with UV hardening, however excellent results were also obtained on metal supports.

### Experimental part

### Example 1: preparations of paint stripping compositions based on DMSO, limonene and methylhydroxyethyl cellulose at different concentrations

Several compositions at increasing concentration of limonene were prepared starting from pure dimethylsulphoxide, gelled with methylhydroxyethyl cellulose. 50 g of the different compositions reported in Table 1 were prepared in a 100 ml beaker: firstly, DMSO was added to the required percentage, then under stirring the percentage of limonene was added drop-wise and finally the methylhydroxyethyl cellulose, dispersing it rapidly on the surface of the liquid. The gel thus obtained was left under stirring for one hour to ensure complete homogenization.

In this manner seven different compositions were prepared which were then tested on about ten samples consisting of different unknown paints and substrates, representing however common cases, comparing application times, applied amount and absorbent layer.

**Table 1: paint stripping compositions with different percentages of dimethylsulphoxide, limonene and methylhydroxyethyl cellulose**

| *Composition abbreviation* | *DMSO* (*% w*/*w)* | *limonene (% w*/*w)* | *methylhydroxyethyl cellulose* (*% w*/*w)* |
|---|---|---|---|
| X1 | 97 | 0 | 3 |
| X2 | 95 | 2 | 3 |
| X3 | 94 | 4 | 2 |
| X4 | 92 | 5 | 3 |
| X5 | 89 | 8 | 3 |
| X6 | 87 | 10 | 3 |
| X7 | 82 | 15 | 3 |

### Example 2: evaluation of the device's absorbent layers for applying the compositions

Based on the preliminary investigations seven possible absorbent layers with different characteristics of composition, thickness and grammage were identified (Table 2).

**Table 2: characteristics of the selected absorbent layers**

| *Abbreviation* | *Composition % wlw* | *Thickness (cm)* | *Grammage (g*/*cm²)* | *Density (g*/*cm³)* | *Porosity* | *Water absorption (g*/*cm²)* |
|---|---|---|---|---|---|---|
| SA1 | 100% polyester | 0.056 | 0.007 | 0.13 | 0.90 | 0.10 |
| SA2 | 70% viscose | 0.040 | 0.004 | 0.10 | 0.93 | 0.07 |
| | 30% other fibres | | | | | |
| SA3 | 70% viscose | 0.050 | 0.008 | 0.16 | 0.89 | 0.09 |
| | 30% polyester | | | | | |
| SA4 | 50% viscose | 0.276 | 0.030 | 0.11 | 0.92 | 0.41 |
| | 40% polyester | | | | | |
| | 10% fibres | | | | | |
| SA5 | 100% cellulose wadding | 0.050 | 0.006 | 0.12 | 0.92 | 0.09 |
| SA6 | cellulose | 0.060 | 0.006 | 0.10 | 0.93 | 0.02 |
| SA7 | 100% cellulose | 0.080 | 0.004 | 0.05 | 0.97 | 0.08 |

Some 2.5 x 5 cm sections of the different materials were cut and applied to a support layer; different quantities (between 1 and 1.5 g) of two compositions of the invention (X5 and X6) were distributed onto the absorbent layer and applied to a series of heterogeneous substrates of paint and painted material.

When the strip was pulled off, the paint removed by means of a spatula and the substrate cleaned with absorbent paper, the effects of paint stripping with formulations X5 and X6 were evaluated and average points were assigned (from 0 to 5). The summary of said evaluations is reported in table 3.

**Table 3: evaluation of the paint stripping capacity of compositions X5 and X6 included within the different absorbent layers.**

| *Absorbent layer* | *Rating X5* | *Rating X6* | *Average rating* |
|---|---|---|---|
| SA 1 | 5 | 5 | 5 |
| SA 2 | 4 | 5 | 4.5 |
| SA 3 | 2 | 3 | 2.5 |
| SA 4 | 1 | 1 | 1 |
| SA 5 | 3 | 3 | 3 |
| SA 6 | 2 | 3 | 2.5 |
| SA 7 | 2 | 2 | 2 |

At the end of the tests for absorbent layer selection, the best results were obtained with the material denoted as SA1, consisting of 100% polyester; slightly worse, though comparable, results were obtained with the material denoted as SA2 consisting of 70% viscose and 30% other fibres. The other materials were found to be less effective in supporting the paint stripping compositions.

The absorption capacity of the absorbent layer SA1 was further tested by evaluating it in relation to the different types of solvents and/or compositions used. To evaluate the absorbent capacity of SA1 (absorption of water or other solvents), tests were carried out by immersing 100 cm² (10x10 cm) of absorbent layer into a 1 cm head of the three individual solvents (water, DMSO, limonene), in a mixture of DMSO and limonene and in composition X6 of table 1. The absorbent layer was immersed for 5 minutes then removed. The first weighing of the absorbent layer was carried out before immersion, the second after gently drip-drying it and finally the third was carried out after manually squeeze-drying. The results are given in table 4 in grams of solvent remaining absorbed in the absorbent layer per cm² of absorbent material.

**Table 4: evaluation of the absorption capacity of the absorbent layer SA1**

| | *Drip-drying (g*/*cm²)* | *Squeeze-drying (g*/*cm²)* |
|---|---|---|
| Water | 0.10 | 0.03 |
| DMSO | 0.08 | 0.03 |
| Limonene | 0.06 | 0.02 |
| DMSO 95% | | |
| Limonene 5% | 0.07 | 0.03 |
| Composition X6 | 0.27 | 0.09 |

### Example 3: evaluation of the paint stripping properties of the compositions based on DMSO, limonene and methylhydroxyethyl cellulose

The paint stripping capacities of the compositions prepared as in example 1, were then verified as described hereinafter.

Strips of an absorbent material 2.5 x 5 cm in size were prepared, then fixed onto the support layer (adhesive tape of PVC or aluminium) of size 3.5 x 6 cm, such as to leave a border of a few millimetres of adhesive free in order to fix the strip, forming a type of plaster. Materials consisting of 100% polyester (SA1) or 70% viscose and 30% polyester (SA2) were selected as the absorbent layers.

1.5 g of paint stripping formulation were spread onto the absorbent layer and the "plaster" thus obtained was applied to the substrate to be paint-stripped making sure that it adhered well, and sealing it laterally with the free part of the adhesive. The product was allowed to react for times between 20 and 90 minutes.

The strip was then removed using plastic tweezers and the surface exposed to the paint stripper was lightly scraped then cleaned with some absorbent paper. On the basis of the paint stripping capacity and the ease with which the paint was removed, ratings from 0 (no effect) to 5 (optimal effect) were given. The summarized evaluations for these tests carried out with the material SA1 averaged over the various samples are given in table 5.

**Table 5: evaluation of the paint stripping compositions with different percentages of dimethylsulphoxide, limonene and methylhydroxyethyl cellulose included in SA1**

| *Compositions* | *DMSOA*/*limonene*/*methylhydroxyethyl cellulose (% w*/*w)* | *Rating (0 - 5)* |
|---|---|---|
| X1 | 97/0/3 | 1 |
| X2 | 95/2/3 | 2 |
| X3 | 94/4/2 | 2 |
| X4 | 92/5/3 | 3 |
| X5 | 89/8/3 | 4 |
| X6 | 87/10/3 | 5 |
| X7 | 82/15/3 | 2 |

At the end of the tests, the composition giving the best results was the X6 composed of DMSO at 87% w/w, limonene at 10% w/w and methylhydroxyethyl cellulose at 3% w/w.

### Example 4: evaluation of the paint stripping composition (DMSO at 87% w/w, limonene at 10% w/w and methylhydroxyethyl cellulose at 3% w/w) applied by means of the device to different manufactured articles

The evaluation of paint stripping activity was undertaken on items where the type of support material and paint was known and also on unknown articles, using the composition X6 of table 1 applied to the device formed from the absorbent layer SA1 composed of 100% polyester and a PVC or aluminium adhesive tape as support layer.

Sections of absorbent layer 2.5 x 5cm in size were cut and fixed to the adhesive support; a quantity equal to 1.5 g of the composition was then distributed thereon and the thus obtained device was applied to the sample to be paint-stripped. For each sample three devices were prepared and applied, which were then removed one at a time after 15, 30 and 60 minutes. After removing the device, the residual paint was removed with a steel spatula and the sample cleaned with some absorbent paper. On the basis of the paint stripping effect and the ease with which the paint was removed, points were given from 0 to 5 for each test. The point scores of the tests are presented in table 6.

**Table 6: paint stripping test on known samples using the final formulation (X6) with treatment times equal to 15, 30 and 60 minutes. Points scale from 0 (no effect) to 5 (optimal effect)**

| *Sample code* | *Support* | *Type of paint (abbreviation)* | *Paint code* | *15'* | *30'* | *60'* |
|---|---|---|---|---|---|---|
| 92467 | Wood | Polyurethane (PU) | 2 | 2 | 3.5 | 3.5 |
| ICP 2-07/4 | Wood | Alkyd (AL) | 9 | 3 | 3.5 | 4 |
| 91949 | Wood | Polyurethane (PU) | 2 | 0.5 | 1.5 | 3 |
| 93000 | Wood | Polyurethane (PU) | 2 | 3.5 | 3.5 | 4 |
| 91104 | Wood | Water-based (H₂O) | 4 | 3.5 | 3 | 4 |
| 91105 | Wood | Water-based (H₂O) | 4 | 2.5 | 4 | 4 |
| 91106 | Wood | Water-based (H₂O) | 4 | 2 | 3 | 4 |
| 91106-2A | Wood | two-component epoxy (EPO2) | 7 | 0.5 | 0.5 | 1 |
| 91106-1B | Wood | two-component epoxy (EPO2) | 7 | 0.5 | 0.5 | 1 |
| 90255 | Wood | Water-based (H₂O) | 4 | 2 | 2 | 3 |
| 87738 | Wood | UV-cured (UV) | 8 | 0 | 0 | 0 |
| 19 | Wood | UV-cured (UV) | 8 | 0 | 0 | 0 |
| 94183 | Metal | Epoxy (EPO) | 5 | 2 | 2 | 3 |
| 91510 | Wood | Polyester (PES) | 1 | 0 | 0 | 0 |

For samples with low point scores after 60 minutes, a further test at 240 minutes was arranged and another test at 240 minutes replacing the paint stripping device after the first 120 minutes. Again in this case points from 0 to 5 were assigned (table 7).

**Table 7: paint stripping test with exposure times equal to 240 minutes and 2 x 120 minutes. Points scale from 0 (no effect) to 5 (optimal effect).**

| *Sample code* | *Support* | *Type of paint (abbreviation)* | *Paint code* | *240'* | *2 x 120'* |
|---|---|---|---|---|---|
| 91949 | Wood | Polyurethane (PU) | 2 | 1 | 2 |
| 91106-2A | Wood | two-component epoxy (EPO2) | 7 | 2 | 4 |
| 91106-1B | Wood | two-component epoxy (EPO2) | 7 | 2 | 4 |
| 87738 | Wood | UV-cured (UV) | 8 | 0 | 0 |
| 19 | Wood | UV-cured (UV) | 8 | 0 | 0 |
| 94183 | Metal | Epoxy (EPO) | 5 | 3 | 4 |
| 91510 | Wood | Polyester (PES) | 1 | 1 | 1 |

Another series of tests was carried out on samples prepared in the laboratory with paint sprays acquired from DIY shops. The wood supports were firstly sanded with fine grade sand paper and cleaned of the dust with compressed air; three coats of paint were then applied, each 24 hours apart, and finally allowed to dry at room temperature for 30 days. Finally the paint stripping tests were undertaken with the method used for the known samples. A steel manufactured product was used for the metal supports. The support was first cleaned with ethyl alcohol and allowed to dry for one day then three coats of paint were applied each 24 hours apart. The samples were allowed to dry for 30 days and finally the paint stripping tests were carried out with the method used for the known samples. The results obtained are presented in table 8.

**Table 8: paint stripping test on samples painted In the laboratory, with exposure times equal to 15, 30 and 60 minutes. Points score from 0 (no effect) to 5 (optimal effect)**

| *Sample code* | *Support* | *Paint* | *15'* | *30'* | *60'* |
|---|---|---|---|---|---|
| Lab1 | Wood | Alkyd spray - glossy red | 2 | 3 | 4 |
| Lab2 | Wood | Alkyd spray - blue | 2 | 3 | 4 |
| Lab3 | Wood | Alkyd spay - matt red | 4 | 5 | 5 |
| Lab4 | Metal | Alkyd spray - matt red | 4 | 5 | 5 |
| Lab5 | Metal | Alkyd spray -blue | 2 | 3 | 4 |
| Lab6 | Wood | Acrylic spray transparent | 4 | 5 | 5 |

Finally a last series of tests was conducted on unknown samples since, in a domestic setting, often the consumer does not know with what type of product the manufactured article desired to be paint stripped is painted. Therefore materials were tested deriving from old furniture, computer chassis, pieces of painted iron, scooter body pieces, boards painted at home, furniture colour samples, etc.

The tests were carried out with the same method as already described and using the composition X6. The application time was 60 minutes. The results are presented in table 9.

**Table 9: paint stripping test on unknown samples, with exposure times equal to 60 minutes. Points score from 0 (no effect) to 5 (optimal effect).**

| *Sample* | *Support* | *Rating* | *Notes* |
|---|---|---|---|
| Computer chassis | metal | 4 | |
| Table leg | metal | 4 | |
| Board painted in orange | wood | 5 | |
| Antique furniture item | wood | 5 | |
| Scooter body | plastic | 5 | |
| Board with two coats of paint: the first | wood | 5 | Clear swelling of the paint. Detachment of the |
| brown, the second white | | | white layer after 30 minutes and of all the paint after 60 minutes, |
| | | | |
| Small cupboard door | wood | 1 | |
| Furniture colour sample: Cherry stained beech | wood | 4 | Polyurethane lacquer |
| Furniture colour sample: Oak effect | wood | 5 | Water-based paint |
| Furniture colour sample: Black beech | wood | 3 | Polyurethane lacquer |
| Furniture colour sample: Dark oak effect | wood | 4 | Water-based paint |
| Furniture colour sample: L5010 red lacquer | wood | 3 | |
| OECE colour sample: orange | wood | 2 | |
| OECE colour sample: purple | wood | 5 | 5 hours after application |

### Example 5: evaluation of the paint stripping composition (DMSO 87% w/w, limonene 10% w/w, methylhydroxyethyl cellulose 3% w/w) applied hot by means of the device to different manufactured articles

### i.Paint stripping with oven heat

5 samples to be paint-stripped were selected from known samples and 3 from unknown samples, and the hot paint stripping test was carried out thereon to evaluate the effect of temperature on the paint stripping process. The devices (hereinafter also known as strips) were prepared as in the previous tests, i.e. 5 x 2.5 cm pieces of the absorbent layer (SA1) were prepared and applied to a slightly larger piece of PVC adhesive tape onto which 1.5 g of the paint stripping composition were deposited. The strip was applied to the test sample and the sample was placed in an oven previously temperature controlled at 50°C. After 15 minutes the sample was removed, the strip pulled off and the paint removed by means of light scraping. The samples which during the test at room temperature had required more time (see table 8) were left in the oven for a further 30 minutes. These tests demonstrated a net increase in paint stripping activity which, in fifteen minutes, reached results comparable to 60 minutes of the room temperature tests. A significant result was achieved with the known samples painted with a two-component paint (see table 6, paint code 7); in this case 30 minutes at 50°C gave a decidedly better result than the 4 hours and the double application in the previous tests.

### ii. Paint stripping with heating by halogen lamp radiation

During these tests an additional heating system was tried which was more localized than the oven test, such that only the part of interest to the paint stripping was heated. For these tests a table lamp with a 50 W halogen bulb was used. The ideal distance (about 10-15 cm) between the lamp and the sample to be paint-stripped was controlled using a digital thermometer with a metal probe, such that a temperature of about 50°C was verified on the surface. The strip prepared by the usual procedure was then applied, and the surface was left under the lamp's radiation for 15 minutes (30 minutes for samples with two-component paint). These tests also showed a positive effect of temperature on the times and on the effectiveness of temperature, although this method proved to be less effective than oven paint stripping.

## Claims

1. A paint stripping composition comprising at least two components having solvent properties, wherein the first component is dimethylsulphoxide in a concentration range comprised from 85 to 90% w/w and the second component is limonene in a concentration range comprised from 5 to 10% w/w.

2. The paint stripping composition according to claim 1, wherein a component having thickening properties is further added, in a concentration range comprised from 2 to 3% w/w.

3. The paint stripping composition according to claim 1. wherein the dimethylsulphoxide is at a concentration of 87% w/w and the limonene is at a concentration of 10% w/w.

4. The paint stripping composition according to claim 2, wherein the thickener is selected from cellulose and ether derivatives thereof.

5. The paint stripping composition according to claim 4, wherein the thickener is selected from the group consisting of methyl cellulose, hydroxyethyl cellulose, methylhydroxyethyl cellulose, hydroxypropyl cellulose, methylhydroxypropyl cellulose.

6. The paint stripping composition according to claim 2, wherein the dimethylsulphoxide is at a concentration of 87% w/w, the limonene is at a concentration of 10% w/w and the thickener is methylhydroxyethyl cellulose at 3% w/w.

7. A kit for paint stripping comprising:
- at least one container containing the paint stripping composition as defined in one of claims 1-6;
- at least one paint stripping device comprising:
- at least one absorbent layer of polymeric type having a thickness of at least 0.40 mm and a grammage of at least 0.004 g/cm², and an absorption capacity for water and/or the paint stripping composition of between 0.05 and 0.30 g/cm²; and
- at least one protective support to which said absorbent layer is combined by a further layer of adhesive material interposed between the two said layers.

8. The kit according to claim 7, wherein the absorbent layer of the device consists of a polymer selected from polyester and viscose of at least 70% w/w, or combinations thereof In the form of a non-woven fabric (NWF) having fibres of average diameter between 5 and 20 µm, porosity between 0.85 and 0.95 and density between 0.10 and 0.20 g/cm³.

9. The kit according to claim 7, wherein the absorbent layer of the device is of polyester in the form of a non-woven fabric having a thickness of 0.50-0.60 mm and a grammage of 0.007-0.009 g/cm² with fibres of average diameter 20 µm, porosity between 0.85 and 0.95, density between 0.10 and 0.20 g/cm³ and an absorption capacity for the paint stripping composition of at least 0.10 g/cm².

10. The kit according to claim 7, wherein the protective layer of the device has a thickness comprised between 5 and 100 µm and is of a material selected from polyvinyl chloride, polyethylene, latex, and aluminium.

11. The kit according to claim 7, wherein the protective layer of the device is of aluminium and has a thickness of 10 µm.

12. The kit according to one of claims 7 to 11 further comprising an instruction leaflet for using the paint stripping composition and the device.

13. A paint stripping method comprising at least the steps of:
- incorporating a paint stripping composition as defined in one of claims 1 to 6 into the absorbent layer of a device as defined in one of claims 7-11;
- applying the device to a surface to be paint-stripped by bringing the absorbent layer incorporating the paint stripping composition into contact with the paint layer to be removed;
- pulling off the device together with one or more paint layers;
- cleaning by light scraping and drying with absorbent paper.

14. The paint stripping method according to claim 13, wherein the paint stripping composition is applied to the absorbent layer in a quantity of 0.10-0.15 g/cm².

15. The paint stripping method according to claim 13, wherein the paint stripping is carried out by heating the manufactured item to be paint-stripped or a portion thereof after applying the device, to a temperature comprised from 40 to 60°C.

## Patentansprüche

1. Farbenabbeizzusammensetzung enthaltend wenigstens zwei Komponenten mit Lösungsmitteleigenschaften, wobei die erste Komponente Dimethylsulfoxid in einem Konzentrationsbereich zwischen 85 und 90 Gew.-% ist und die zweite Komponente Limonen in einem Konzentrationsbereich zwischen 5 und 10 Gew.-% ist.

2. Farbenabbeizzusammensetzung nach Anspruch 1, wobei des Weiteren eine Komponente mit Verdickungseigenschaften in einem Konzentrationsbereich zwischen 2 und 3 Gew.-% enthalten ist.

3. Farbenabbeizzusammensetzung nach Anspruch 1, wobei das Dimethylsulfoxid in einer Konzentration von 87 Gew.-% vorliegt und das Limonen in einer Konzentration von 10 Gew.-% vorliegt.

4. Farbenabbeizzusammensetzung nach Anspruch 2, wobei der Verdicker aus Cellulose und jedem Derivat hiervon ausgewählt ist.

5. Farbenabbeizzusammensetzung nach Anspruch 4, wobei der Verdicker aus der Gruppe ausgewählt ist, welche aus Methylcellulose, Hydroxyethylcellulose, Methylhydroxyethylcellulose, Hydroxypropylcellulose und Methylhydroxypropylcellulose besteht.

6. Farbenabbeizzusammensetzung nach Anspruch 2, wobei das Dimethylsulfoxid in einer Konzentration von 87 Gew.-% vorliegt, das Limonen in einer Konzentration von 10 Gew.-% vorliegt und der Verdicker Methylhydroxyethylcellulose in einer Konzentration von 3 Gew.-% ist.

7. Kit zum Abbeizen von Farben enthaltend:
- wenigstens einen Behälter enthaltend eine Farbenabbeizzusammensetzung nach einem der Ansprüche 1 bis 6,
- wenigstens eine Farbenabbeizvorrichtung enthaltend:
- wenigstens eine Absorptionsschicht vom Polymertyp mit einer Dicke von wenigstens 0,40 mm und mit einer Grammatur von wenigstens 0,004 g/cm² sowie einer Absorptionsfähigkeit für Wasser und/oder für die Farbenabbeizzusammensetzung zwischen 0,05 und 0,30 g/cm², und
- wenigstens einen Schutzträger, mit dem die Absorptionsschicht durch eine weitere Schicht aus Klebstoffmaterial, welches zwischen den zwei Schichten angeordnet ist, verbunden ist.

8. Kit nach Anspruch 7, wobei die Absorptionsschicht der Vorrichtung aus einem Polymer ausgewählt aus Polyester und Viskose in wenigstens 70 Gew.-% oder Mischungen hiervon in der Form eines nichtgewebten Textils (NWF) mit Fasern mit einem durchschnittlichen Durchmesser zwischen 5 und 20 µm, mit einer Porosität zwischen 0,85 und 0,95 sowie mit einer Dichte zwischen 0,10 und 0,20 g/cm³ besteht.

9. Kit nach Anspruch 7, wobei die Absorptionsschicht der Vorrichtung aus Polyester in der Form eines nichtgewebten Textils mit einer Dicke von 0,50 bis 0,60 mm sowie mit einer Grammatur von 0,007 bis 0,009 g/cm² mit Fasern mit einem mittleren Durchmesser von 20 µm, mit einer Porosität zwischen 0,85 und 0,95, mit einer Dichte zwischen 0,10 und 0,20 g/cm³ sowie mit einer Absorptionsfähigkeit für die Farbenabbeizzusammensetzung von wenigstens 0,10 g/cm² zusammengesetzt ist.

10. Kit nach Anspruch 7, wobei die Schutzschicht der Vorrichtung eine Dicke zwischen 5 und 100 µm aufweist und aus einem Material ausgewählt aus Polyvinylchlorid, Polyethylen, Latex und Aluminium zusammengesetzt ist.

11. Kit nach Anspruch 7, wobei die Schutzschicht der Vorrichtung aus Aluminium zusammengesetzt ist und eine Dicke von 10 µm aufweist.

12. Kit nach einem der Ansprüche 7 bis 11 des Weiteren enthaltend eine Instruktionsbroschüre zum Verwenden der Farbenabbeizzusammensetzung und der Vorrichtung.

13. Farbenabbeizverfahren umfassend wenigstens die Schritte:
- Inkorporieren einer Farbenabbeizzusammensetzung nach einem der Ansprüche 1 bis 6 in die Absorptionsschicht einer Vorrichtung nach einem der Ansprüche 7 bis 11,
- Aufbringen der Vorrichtung auf eine Oberfläche, von welcher die Farbe abzubeizen ist, durch In-Kontakt-Bringen der Absorptionsschicht enthaltend die Farbenabbeizzusammensetzung mit der zu entfernenden Farbschicht,
- Abziehen der Vorrichtung zusammen mit einer oder mehreren Farbschichten,
- Säubern durch Lichtradieren und Trocknen mit Absorptionspapier.

14. Farbabbeizverfahren nach Anspruch 13, wobei die Farbabbeizzusammensetzung auf die Absorptionsschicht in einer Menge von 0,10 bis 0,15 g/cm² aufgebracht wird.

15. Farbabbeizverfahren nach Anspruch 13, wobei das Farbenabbeizen durchgeführt wird durch Erhitzen des hergestellten Gegenstandes, von dem Farbe abzubeizen ist, oder eines Teils hiervon nach Aufbringen der Vorrichtung, und zwar auf eine Temperatur von 40 und 60°C.

## Revendications

1. Composition de décapage de peinture comprenant au moins deux composants ayant des propriétés de solvant, dans laquelle le premier composant est le diméthylsulfoxyde dans une plage de concentration allant de 85 à 90 % p/p et le second composant est le limonène dans une plage de concentration allant de 5 % à 10 % p/p.

2. Composition de décapage de peinture selon la revendication 1, dans laquelle un composant ayant des propriétés d'épaississement est en outre ajouté, dans une plage de concentration allant de 2 à 3 % p/p.

3. Composition de décapage de peinture selon la revendication 1, dans laquelle le diméthylsulfoxyde est à une concentration de 87 % p/p et le limonène est à une concentration de 10 % p/p.

4. Composition de décapage de peinture selon la revendication 2, dans laquelle l'épaississant est choisi parmi la cellulose et ses dérivés éther.

5. Composition de décapage de peinture selon la revendication 4, dans laquelle l'épaississant est choisi dans le groupe consistant en la méthylcellulose, l'hydroxyéthylcellulose, la méthylhydroxyéthylcellulose, l'hydroxypropylcellulose, la méthylhydroxypropylcellulose.

6. Composition de décapage de peinture selon la revendication 2, dans laquelle le diméthylsulfoxyde est à une concentration de 87 % p/p, le limonène est à une concentration de 10 % p/p et l'épaississant est la méthylhydroxyéthylcellulose à 3 % p/p.

7. Kit de décapage de peinture comprenant :
- au moins un contenant contenant la composition de décapage de peinture telle que définie dans l'une quelconque des revendications 1 à 6 ;
- au moins un dispositif de décapage de peinture comprenant :
- au moins une couche absorbante de type polymérique ayant une épaisseur d'au moins 0,40 mm et un grammage d'au moins 0,004 g/cm², et un pouvoir d'absorption pour l'eau et/ou la composition de décapage de peinture entre 0,05 et 0,30 g/cm² ; et
- au moins un support protecteur auquel ladite couche absorbante est combinée par une couche supplémentaire de matériau adhésif interposée entre les deux dites couches.

8. Kit selon la revendication 7, dans lequel la couche absorbante du dispositif consiste en un polymère choisi parmi le polyester et la viscose d'au moins 70 % p/p, ou leurs combinaisons sous la forme d'une étoffe non tissée (ENT) ayant des fibres de diamètre moyen entre 5 et 20 µm, une porosité entre 0,85 et 0,95 et une masse volumique entre 0,10 et 0,20 g/cm³.

9. Kit selon la revendication 7, dans lequel la couche absorbante du dispositif est en polyester sous la forme d'une étoffe non tissée ayant une épaisseur de 0,50 à 0,60 mm et un grammage de 0,007 à 0,009 g/cm² avec des fibres de diamètre moyen de 20 µm, une porosité entre 0,85 et 0,95, une masse volumique entre 0,10 et 0,20 g/cm³ et un pouvoir d'absorption pour la composition de décapage de peinture d'au moins 0,10 g/cm².

10. Kit selon la revendication 7, dans lequel la couche protectrice du dispositif a une épaisseur comprise entre 5 et 100 µm et est constituée d'un matériau choisi parmi le polychlorure de vinyle, le polyéthylène, le latex, et l'aluminium.

11. Kit selon la revendication 7, dans lequel la couche protectrice du dispositif est en aluminium et a une épaisseur de 10 µm.

12. Kit selon l'une des revendications 7 à 11, comprenant en outre un feuillet d'instructions permettant d'utiliser la composition de décapage de peinture et le dispositif.

13. Procédé de décapage de peinture comprenant au moins les étapes de :
- incorporation d'une composition de décapage de peinture telle que définie dans l'une des revendications 1 à 6 dans la couche absorbante d'un dispositif tel que défini dans l'une des revendications 7 à 11 ;
- application du dispositif à une surface dont la peinture doit être décapée en amenant la couche absorbante incorporant la composition de décapage de peinture en contact avec la couche de peinture à enlever ;
- retrait du dispositif conjointement avec une ou plusieurs couches de peinture ;
- nettoyage par raclage léger et séchage avec du papier absorbant.

14. Procédé de décapage de peinture selon la revendication 13, dans lequel la composition de décapage de peinture est appliquée à la couche absorbante dans une quantité de 0,10 à 0,15 g/cm².

15. Procédé de décapage de peinture selon la revendication 13, dans lequel le décapage de peinture est réalisé par chauffage de l'article fabriqué dont la peinture doit être décapée ou d'une portion de celui-ci après application du dispositif, à une température allant de 40 à 60 °C.
